# EUROPÄISCHE PATENTSCHRIFT

(11) **EP 3 903 557 B1**
(45) Veröffentlichungstag und Bekanntmachung des Hinweises auf die Patenterteilung: **16.08.2023**
(21) Anmeldenummer: 21153404.5
(22) Anmeldetag: 26.01.2021
(51) Int. Cl.: A01D 41/12

(54) **SELBSTFAHRENDER MÄHDRESCHER SOWIE VERFAHREN ZUR ERNTE**
SELF-PROPELLED COMBINE AND METHOD FOR HARVESTING
MOISSONNEUSE-BATTEUSE AUTONOME, AINSI QUE PROCÉDÉ DE RÉCOLTE

(30) Priorität: 29.04.2020 DE 102020111603
(43) Veröffentlichungstag der Anmeldung: 03.11.2021
(73) Patentinhaber: CLAAS Selbstfahrende Erntemaschinen GmbH, 33428 Harsewinkel (DE)
(72) Erfinder: Vieregge, Christopher, 32694 Dörentrup (DE); Schwarz, Michael, 53604 Bad Honnef (DE); Diekamp, Andreas, 49176 Hilter (DE)
(74) Vertreter: CLAAS Gruppe

(56) Entgegenhaltungen:
- EP-A1- 3 150 058
- EP-A1- 3 530 097
- EP-A1- 3 662 737
- EP-A2- 1 790 208

## Beschreibung

Die Erfindung betrifft einen selbstfahrenden Mähdrescher gemäß dem Oberbegriff von Anspruch 1. Ferner betrifft die vorliegende Anmeldung ein Verfahren zur Ernte gemäß dem Oberbegriff von Anspruch 14.

Der Mähdrescher im Sinne der vorliegenden Anmeldung ist dazu geeignet, auf einem Feld aufstehende Pflanzen zu ernten, insbesondere in den Pflanzen enthaltene Körner aus den selbigen herauszulösen und restliche Bestandteile auf dem Feld auszuwerfen. Bei den Pflanzen kann es sich insbesondere um Getreide wie Weizen oder Gerste handeln. In der Praxis ist es üblich, die restlichen Bestandteile zu Strohballen zu verarbeiten oder auf dem Feld auszuwerfen und anschließend wieder in das selbige einzuarbeiten, um dem Feld Nährstoffe zuzuführen.

Der Mähdrescher weist eine Abscheidevorrichtung zur Abscheidung eines hauptsächlich von Körnern gebildeten Gutstroms von einem hauptsächlich von Pflanzenresten gebildeten Reststrom auf. Die Abscheidevorrichtung kann hierbei beispielsweise in Form eines Hordenschüttlers oder mindestens eines Trennrotors ausgebildet sein, welcher den Gutstrom, bestehend aus Körnern und weiteren Restbestandteilen, mittels einer Schüttelbewegung von dem Reststrom trennt, wodurch sich der Gutstrom schwerkraftbedingt unterhalb des Reststroms ablagert. Darüber hinaus umfasst der Mähdrescher eine Häckselvorrichtung, mittels der der Reststrom verarbeitet, vorzugsweise zerkleinert, wird. Um den Gutstrom von den darin enthaltenen Restbestandteilen zu reinigen, weist der Mähdrescher üblicherweise eine Reinigungsvorrichtung auf. Die Reinigungsvorrichtung kann hierbei beispielsweise in Form von zwei übereinander angeordneten Sieben ausgebildet sein, wobei vorzugsweise ein Lochdurchmesser der Siebe derart dimensioniert ist, dass ein Hindurchfallen von Körnern ermöglicht ist, während die Restbestandteile des Gutstroms mittels der Siebe zurückgehalten werden. Ferner umfasst der Mähdrescher mindestens eine Sauggebläsevorrichtung, wobei die Sauggebläsevorrichtung der Reinigungsvorrichtung nachgeordnet ist, sodass die Restbestandteile durch eine Eintrittsöffnung der Sauggebläsevorrichtung ansaugbar und auf diese Weise mittels der Sauggebläsevorrichtung von der Reinigungsvorrichtung übernehmbar sind. Da die Restbestandteile typischerweise im Verhältnis zu den Körnern sehr leicht sind, werden sie infolge des mittels der Sauggebläsevorrichtung erzeugten Luftstroms angesaugt, während die Körner hiervon zumindest weitestgehend unbeeinflusst bleiben.

Der Mähdrescher umfasst weiterhin mindestens eine Verteilvorrichtung, die zum Auswurf zumindest des mittels der Häckselvorrichtung verarbeiteten Reststroms geeignet ist, wobei eine Austrittsöffnung der Sauggebläsevorrichtung, durch die die Restbestandteile aus der Sauggebläsevorrichtung ausblasbar sind, höhenmäßig unterhalb der Verteilvorrichtung positioniert ist. Die Verteilvorrichtung kann insbesondere von einem Radialverteiler gebildet sein. Der Mähdrescher kann mehrere, insbesondere zwei, Verteilvorrichtungen aufweisen.

Mähdrescher der vorstehend beschriebenen Art sind in dem Stand der Technik in einer Vielzahl bereits bekannt. Typischerweise umfassen gattungsgemäße Mähdrescher ein Schneidwerk, mittels dessen die Pflanzen abgeschnitten und aufgenommen werden können. Die abgeschnittenen Pflanzen sind sodann mittels eines Schrägförderers zu einem Dreschwerk beförderbar, welches die Pflanzen derart bearbeitet, insbesondere zerkleinert, dass in den Pflanzen enthaltene Körner aus den Pflanzen herausgelöst werden. Ein Teil der Körner kann daraufhin direkt am Dreschwerk durch einen Dreschkorb hindurch abgeschieden und auf diese Weise von Pflanzenresten getrennt werden. Da typischerweise mittels des Dreschwerks nicht bereits alle Körner von den Pflanzenresten getrennt werden können, wird ein aus Pflanzenresten und (Rest-)Körner gebildeter Mischstrom an die Abscheidevorrichtung übergeben, die in der beschriebenen Weise die restlichen Körner zumindest weitestgehend von den Pflanzenresten abscheiden kann, sodass der Mischstrom in den Gutstrom und den Reststrom getrennt wird.

Ein gattungsgemäßer Mähdrescher ist beispielhaft aus der EP 1 790 208 A2 bekannt. Diese beschäftigt sich mit der Aufgabe, eine Anzahl in dem Mähdrescher verwendeter Arbeitsorgane zu reduzieren. Hierzu vermischt der dort beschriebene Mähdrescher den von der Häckselvorrichtung zerkleinerten Reststrom mit Restbestandteilen des Gutstroms, welcher mittels der Reinigungsvorrichtung von den Körnern getrennt wurde. Sowohl der Reststrom als auch die Restbestandteile werden mittels einer Sauggebläsevorrichtung in eine Verteilvorrichtung geführt und schließlich mittels letzterer gemeinsam unter Ausbildung einer Schicht auf dem Feld verteilt.

Als nachteilig an den bekannten Mähdreschern hat es sich herausgestellt, dass ein vermehrter Einsatz von Pflanzenschutzmitteln notwendig ist, der eine erhöhte Resistenz von Unkräutern zur Folge haben kann.

Der Erfindung liegt die Aufgabe zugrunde, einen Mähdrescher bereit zu stellen, der dazu geeignet ist, das Keimen von in den Restbestandteilen enthaltener Restkörner zu reduzieren.

Die zugrunde liegende Aufgabe wird erfindungsgemäß mittels eines Mähdreschers mit den Merkmalen des Anspruchs 1 gelöst. Vorteilhafte Ausgestaltungen ergeben sich aus den zugehörigen Unteransprüchen.

Der erfindungsgemäße Mähdrescher weist die Merkmalen des Anspruchs 1 auf. Die Restbestandteile werden demzufolge im Vergleich zum Stand der Technik nicht der Verteilvorrichtung zugeführt und mittels letzterer gemeinsam mit dem verarbeiteten Reststrom ausgeworfen. Stattdessen findet der Auswurf effektiv mittels der Sauggebläsevorrichtung statt, die die Restbestandteile über den Streublechverteiler auf dem Feld verteilt.

Im Sinne dieser Anmeldung wird als "Gutstrom" ein Gemisch aus Körnern, Spreu, insbesondere Hülsen und Spelzen, sowie Kurzstrohanteilen verstanden, wobei die Spreu und die Kurzstrohanteile als "Restbestandteile" zusammengefasst werden.

Als "Reststrom" wird im Sinne dieser Anmeldung wird ein Gemisch aus Pflanzenresten, insbesondere Halmen und weiteren Strohanteilen, verstanden. Dabei kann der Reststrom auch als ein Teil der Pflanzen abzüglich des Gutstroms verstanden werden.

Der erfindungsgemäße Mähdrescher hat viele Vorteile. Insbesondere ermöglicht es der erfindungsgemäße Mähdrescher infolge einer Anordnung der Verteilvorrichtung relativ zu dem Streublechverteiler in der Art, dass der Streublechverteiler der Verteilvorrichtungen untenseitig zugeordnet ist, dass mittels des Streublechverteilers auf einem Feld verteilte Restbestandteile abgeernteter Pflanzen als eine erste Schicht auf dem Feld ablegbar sind, während ein von der Verteilvorrichtung ausgeworfener Reststrom als eine zweite Schicht auf der ersten Schicht ablegbar ist. Hierdurch sind ackerbauliche Probleme hinsichtlich der Restbestandteile vermeidbar. Derartige Probleme treten in aller Regel bei Mähdreschern auf, deren Restbestandteile und Reststrom mittels einer einzigen Verteilvorrichtung ausgeworfen werden. Hierbei entstehen infolge eines Aufeinandertreffens des Gutstroms auf den Reststrom Verwirbelungen, die eine Qualität der Verteilung des Gutstroms auf dem Feld negativ beeinflussen. Mittels eines getrennten Auswurfs der Restbestandteile und des Reststroms ist mithin verhinderbar, dass derartige Verwirbelungen entstehen.

Es ist gemäß vorzugsweisen Ausgestaltung der Erfindung vorgesehen, dass die Leitelemente nebeneinander angeordnet sind und sich Abstände zwischen benachbarten Leitelementen - in Strömungsrichtung der Restbestandteile betrachtet - über die Länge der Leitelemente hinweg vergrößern. Mit anderen Worten sind die Leitelemente im Wesentlichen fächerartig angeordnet, sodass die dem Streublechverteiler zugeführten Restbestandteile mittels der Leitelemente insbesondere entlang einer Querrichtung des Mähdreschers verteilbar sind. Die in einer Überfahrt zur Verfügung stehende Breite zur Verteilung der Restbestandteile wird hierbei in aller Regel maßgeblich von einem in einem vorderen Bereich des Mähdreschers angeordnetem Schneidwerk bestimmt. Um diese Breite vollständig auszunutzen, hat sich die beschriebene Ausgestaltung der Leitelemente als besonders vorteilhaft erwiesen.

Die Strömungsrichtung der Restbestandteile ist hierbei vorzugsweise von der Sauggebläsevorrichtung vorgebbar und kann zunächst parallel zu einem mittleren Leitelement des Streublechverteilers verlaufen, wobei die Restbestandteile aufgrund ihrer mittels der Sauggebläsevorrichtung zugeführten kinetischen Energie beim Auftreffen auf die Leitelemente umgelenkt werden. Ein Grad der Ablenkung wird hierbei durch eine Orientierung des jeweiligen Leitelements relativ zu dem mittleren Leitelement bestimmt. Infolge einer vorstehend genannten Ausrichtung der Leitelemente wird insgesamt ein breiter Auswurf bewirkt. In aller Regel werden die Restbestandteile auf dem Feld abgelegt und schließlich in den Boden eingearbeitet. Um zu verhindern, dass es hierbei aufgrund eines Flüssigkeitseinschlusses zur Bildung von Schimmel kommt, ist es erforderlich, die Restbestandteile in einer möglichst dünnen Schicht auf dem Feld abzulegen, sodass auch eine dem Feld zugewandten Oberfläche der abgelegten Schicht getrocknet werden kann. Alternativ kann es auch vorgesehen sein, die ausgeworfenen Restbestandteile und den Reststrom zu Ballen zu verarbeiten Vorzugsweise ist vorgesehen, dass die Leitelemente als Bleche ausgebildet sind.

Gemäß einer vorzugsweisen Ausgestaltung der Erfindung sind die Verteilvorrichtung und der Streublechverteiler - in Längsrichtung des Mähdreschers betrachtet - relativ zueinander versetzt angeordnet, wobei vorzugsweise der Streublechverteiler näher an der Sauggebläsevorrichtung positioniert ist als die Verteilvorrichtung. Die vorgenannte Anordnung der Verteilvorrichtung, des Streublechverteilers und der Sauggebläsevorrichtung ist insbesondere im Hinblick auf eine kompakte Ausgestaltung des Mähdreschers besonders vorteilhaft. Um die mittels der Sauggebläsevorrichtung ausgeblasenen Restbestandteile möglichst verlustfrei an den Streublechverteiler zu übergeben, hat es sich als besonders vorteilhaft herausgestellt, diesen nah an der Sauggebläsevorrichtung zu positionieren.

Gemäß einer vorteilhaften Ausgestaltung der Erfindung ist vorgesehen, dass - in einer Seitenansicht des Mähdreschers betrachtet - der Streublechverteiler horizontal unterhalb der Häckselvorrichtung und die Verteilvorrichtung hinter der Häckselvorrichtung angeordnet sind. Auch eine derartige Anordnung hat sich im Hinblick auf eine kompakte Ausgestaltung des Mähdreschers als besonders vorteilhaft erwiesen. In diesem Fall ist es vorzugsweise vorgesehen, dass eine dem Reststrom mittels der Häckselvorrichtung zugeführte kinetische Energie dazu eingesetzt wird, den Reststrom auf dem Feld auszuwerfen. Vorteilhafter Weise ist mithin keine gesonderte Einrichtung, wie beispielsweise eine Sauggebläsevorrichtung, zur Beschleunigung des Reststroms nötig.

Vorzugsweise ist vorgesehen, dass die Austrittsöffnung der Sauggebläsevorrichtung und ein Eintrittsquerschnitt des Streublechverteilers gemeinsam in einer, vorzugsweise horizontalen, Ebene angeordnet sind. Vorteilhafter Weise kann hierdurch sichergestellt werden, dass die von der Sauggebläsevorrichtung angesaugten Restbestandteile des Gutstroms im Wesentlichen ohne Verlust in den Streublechverteiler leitbar sind. Insbesondere ist verhinderbar, dass ein Teil der Restbestandteile bereits vor Erreichen des Streublechverteilers auf dem Feld ausgeworfen wird, sodass in diesen Bereichen infolge des Auswurfs der Restbestandteile mittels des Streublechverteilers eine "doppelte Schicht" ausgebildet wird, die die genannten ackerbaulichen Probleme nach sich zieht.

Eine vorteilhafte Ausgestaltung der Erfindung sieht ferner vor, dass die Häckselvorrichtung, die Verteilvorrichtung und der Streublechverteiler gemeinsam baulich zu einer Einheit verbunden sind. Auf diese Weise sind die Häckselvorrichtung, die Verteilvorrichtung und der Streublechverteiler gemeinschaftlich an einem Rahmen des Mähdreschers befestigbar, insbesondere mittels einer einzigen Befestigungseinrichtung. Eine Anzahl in dem Mähdrescher verbauter Bauteile lässt sich mithin reduzieren.

Eine besonders vorteilhafte Weiterentwicklung des erfindungsgemäßen Mähdreschers sieht dabei vor, dass die Einheit als Ganzes relativ zu dem Rahmen des Mähdreschers bewegbar und auf diese Weise in verschiedene Positionen überführbar ist. Hierdurch lässt sich der Mähdrescher einfach und schnell einer jeweiligen Situation entsprechend anpassen. Vorzugsweise ist dabei vorgesehen, dass die Einheit in mindestens drei Positionen überführbar ist, die zur Überführung des Mähdreschers in einen jeweiligen Zustand vorgesehen sind, wobei die Einheit insbesondere linear entlang des Rahmens zwischen einander gegenüberliegenden Endpositionen, einer am weitesten vorne befindlichen, proximalen Endposition und einer am weitesten hinten befindlichen, distalen Endposition bewegbar ist:

In einer "ersten Position", die vorzugsweise in einem Arbeitszustand des Mähdreschers eingenommen wird, ist die Einheit in einem mittleren Bereich zwischen der proximalen und der distalen Endposition angeordnet. Diese erste Position eignet sich insbesondere zum Ernten des Felds und/oder zum Verteilen der Restbestandteile und des Reststroms auf dem selbigen.

Eine "zweite Position", die bevorzugt in einem Straßenzustand des Mähdreschers angenommen wird, entspricht der proximalen Endposition. In dieser Position kann eine Schwadablage vorgenommen werden, bei der der Reststrom insbesondere an der Häckseleinrichtung vorbei geleitet und reihenförmig auf dem Feld abgelegt werden kann. Die Verteilvorrichtung ist bei der Schwadablage typischerweise inaktiv und der Auswurf von Material beschränkt sich auf die Restbestandteile. Auch eignet sich die proximale Endposition der Einheit beim Überfahren einer Verkehrsstraße, da eine Länge des Mähdreschers in diesem Zustand minimal ist. Ein Überfahren einer Verkehrsstraße ist mithin einfacher möglich. Zudem ist die hintere Achslast des Mähdreschers reduziert.

Schließlich ist vorgesehen, dass die Einheit in einer "dritten Position", die vorzugsweise einem Wartungszustand des Mähdreschers zugewiesen ist, vorliegen kann, wobei die dritte Position der distalen Endposition entspricht. Diese distale Endposition eignet sich insbesondere bei anfallenden Reparaturen oder zu Wartungszwecken, da die Einheit bestehend aus der Häckselvorrichtung, der Verteilvorrichtung und dem Streublechverteiler hierbei besonders leicht zugänglich ist. Selbstverständlich sind andere Positionen ebenfalls denkbar.

Alternativ oder zusätzlich kann auch die Sauggebläsevorrichtung relativ zu einem Rahmen des Mähdreschers bewegbar und auf diese Weise in verschiedene Positionen überführbar ist. Die Sauggebläsevorrichtung lässt sich hierdurch ebenfalls besonders einfach und schnell an einen jeweiligen Zustand des Mähdreschers anpassen. Dabei ist eine Überführbarkeit der Sauggebläsevorrichtung insbesondere in Verbindung mit einer Überführbarkeit der Einheit besonders von Vorteil, da sich infolge der unabhängigen Bewegung der Sauggebläsevorrichtung und der Einheit eine Vielzahl von Ausrichtungsmöglichkeiten ergeben. Dabei kann es besonders vorteilhaft sein, wenn die Sauggebläsevorrichtung in dem Arbeitszustand als auch in Straßenzustand des Mähdreschers an die Reinigungseinrichtung angeschlossen ist, während sie in dem Wartungszustand des Mähdreschers an die Einheit angeschlossen ist.

Eine weitere Ausgestaltung der Erfindung sieht vor, dass die Einheit und die Sauggebläsevorrichtung beabstandet voneinander an einem Rahmen des Mähdreschers positioniert sind, wobei die Restbestandteile nach ihrem Austritt aus der Austrittsöffnung der Sauggebläsevorrichtung mittels eines Führkanals dem Streublechverteiler zugeleitet werden. Hierbei ist die Sauggebläsevorrichtung vorzugsweise unmittelbar an die Reinigungsvorrichtung angeschlossen, während sich die Einheit in ihrer oben beschriebenen "ersten Position" befindet. Bei einer unmittelbaren Anordnung der Sauggebläsevorrichtung an die Reinigungseinrichtung kann sichergestellt werden, dass eine von der Sauggebläsevorrichtung erzeugte Saugluftströmung im Bereich der Reinigungsvorrichtung maximal ist, sodass die Restbestandteile vollständig von der Reinigungsvorrichtung übernehmbar sind. Eine derartige Anordnung der Sauggebläsevorrichtung, der Reinigungsvorrichtung sowie der Einheit hat sich insbesondere in dem Arbeitszustand des Mähdreschers als besonders vorteilhaft erwiesen.

Eine weiterhin vorzugsweise Ausgestaltung der Erfindung sieht ferner vor, dass die Einheit und die Sauggebläsevorrichtung unmittelbar aneinander anschließend an dem Rahmen des Mähdreschers positioniert sind, sodass eine Strecke, die die Restbestandteile ausgehend von der Austrittsöffnung der Sauggebläsevorrichtung bis zu dem Streublechverteiler überwinden, minimal, vorzugsweise gleich null, ist. Eine derartige Anordnung eignet sich aus den oben genannten Gründen insbesondere für den Straßenzustand des Mähdreschers.

Eine weitere Ausgestaltung der Erfindung sieht vor, dass die Sauggebläsevorrichtung in einer von der Reinigungsvorrichtung beabstandeten Position an dem Rahmen des Mähdreschers angeordnet ist. Eine von der Reinigungsvorrichtung beabstandete Position der Sauggebläsevorrichtung hat sich insbesondere bei anfallenden Wartungsarbeiten an der Sauggebläsevorrichtung und/oder der Reinigungsvorrichtung als besonders vorteilhaft erweisen, da der die Sauggebläsevorrichtung als auch die Reinigungsvorrichtung auf diese Weise besonders leicht zugänglich sind.

Die zugrunde liegende Aufgabe wird ferner mittels eines Verfahrens zur Ernte von auf einem Feld aufstehender Pflanzen mit den Merkmalen des Anspruchs 14 gelöst.

Das erfindungsgemäße Verfahren ist dadurch gekennzeichnet, dass die Restbestandteile mittels der Sauggebläsevorrichtung in einen Streublechverteiler des Mähdreschers abgegeben werden, der der Verteilvorrichtung untenseitig zugeordnet ist.

Das erfindungsgemäße Verfahren ist mittels des erfindungsgemäßen Mähdreschers besonders einfach durchführbar. Die in Bezug auf den erfindungsgemäßen Mähdrescher genannten Vorteile werden analog mittels des vorbeschriebenen Verfahrens erzielt.

Die Erfindung ist nachstehend anhand eines Ausführungsbeispiels, das in den Figuren dargestellt ist, näher erläutert. Es zeigt:
- Fig. 1:: einen vertikalen Schnitt durch einen erfindungsgemäßen Mähdrescher,
- Fig. 2:: eine Detailansicht eines hinteren Teils des Mähdreschers aus Figur 1,
- Fig. 3:: wie Figur 2, wobei eine von einer Verteilvorrichtung und einem Streublechverteiler gebildete Einheit des Mähdreschers in einer ersten Position vorliegt,
- Fig. 4:: wie Figur 3, wobei die Einheit in einer dritten Position vorliegt und
- Fig. 5:: eine weitere Detailansicht eines Streublechverteilers und des Mähdreschers aus Figur 1.

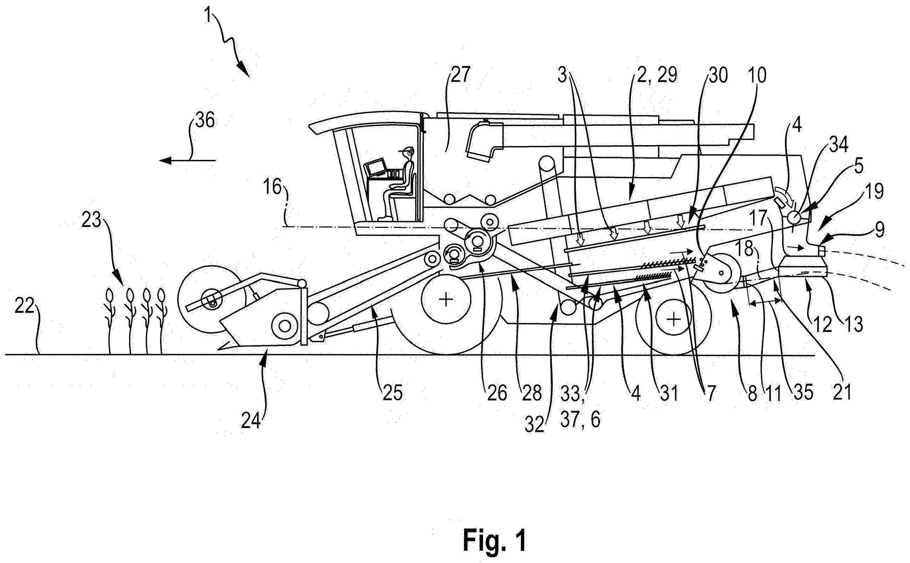

Ein Ausführungsbeispiel, das in den **Figuren 1 bis 5** gezeigt ist, betrifft einen erfindungsgemäßen Mähdrescher **1.** Der Mähdrescher **1** weist ein in einem vorderen Bereich des Mähdreschers **1** angeordnetes Schneidwerk **24** auf, mittels dessen Pflanzen **23** eines Feldes **22** während einer Überfahrt des Mähdreschers **1** über das Feld **22** abtrennbar sind. Die abgetrennten Pflanzen **23** werden mittels eines Schrägförderers **25,** welcher dem Schneidwerk **24** - entgegen einer Fahrtrichtung **36** des Mähdreschers **1** betrachtet - nachgeordnet und unter einem Winkel zu einer Längsrichtung **16** des Mähdreschers ausgerichtet ist an ein Dreschwerk **26** übergeben.

Mittels des Dreschwerks **26** werden die Pflanzen **23** verarbeitet, wobei insbesondere Körner der geernteten Pflanzen **23** aus den selbigen herausgelöst werden, welche zusammen mit Restbestandteilen **7** in Form von Spreu und Kurzstroh durch Öffnungen in dem Dreschwerk **26** auf einen unterhalb des selbigen angeordneten ersten Boden **28** befördert werden. Nicht abgeschiedene Körner werden ausgehend von dem Dreschwerk **26** zusammen mit Pflanzenresten, die insbesondere in Form von Halmen vorliegen, an eine Abscheidevorrichtung **2** übergeben, die hier in Form eines Abscheiderotors **29** ausgebildet ist. Die Abscheidevorrichtung **2** ist demzufolge dem Dreschwerk **26,** entlang der Längsrichtung **16** des Mähdreschers **1** betrachtet, nachgeordnet.

Infolge einer mittels des Abscheiderotors **29** erzeugten Drehbewegung erfolgt eine Trennung der verbleibenden Körner von den Pflanzenresten, wodurch ein hauptsächlich von den Körnern gebildeter Gutstrom 3 und ein hauptsächlich von den Pflanzenresten gebildeter Reststrom **4** gebildet werden, die fortan verschiedene Wege in dem Mähdrescher **1** durchlaufen: Der Gutstrom **3** fällt schwerkraftbedingt durch Öffnungen des Abscheiderotors **29** auf einen unterhalb des selbigen angeordneten zweiten Boden **30** ("Rücklaufboden"), der unter einem Winkel relativ zu der Längsrichtung **16** des Mähdreschers **1** angeordnet ist und ebenfalls eine Schüttelbewegung erzeugt, sodass der Gutstrom **3** auf den ersten Boden **28** überführt wird.

Unterhalb des Hordenschüttlers **29** ist eine Reinigungsvorrichtung **6** angeordnet, die im Wesentlichen aus zwei übereinander angeordneten Sieben **33, 37** gebildet ist, die ebenfalls eine Schüttelbewegung ausführen. Die beiden Siebe **33, 37** sind hierbei relativ zu der Längsrichtung **16** des Mähdreschers **1** unter einem Winkel angeordnet.

Mittels einer Sauggebläsevorrichtung **8,** die unmittelbar rückwärtig an die Reinigungseinrichtung **6** angeschlossen ist, ist ein Saugluftstrom erzeugbar, der die auf dem ersten Boden **28** aufliegenden Restbestandteile **7** durch eine Eintrittsöffnung **10** ansaugt, sodass die Restbestandteile **7** von dem ersten Boden **28** über die Reinigungsvorrichtung **6** geführt und von selbigen übernommen werden, während Körner durch die Öffnungen der Siebe **33, 37** hindurch fallen und von einem dritten Boden **31** aufgefangen werden, der unterhalb der Reinigungsvorrichtung **6** angeordnet ist. Der dritte Boden **31** steht hierbei mit einer Förderschnecke **32** in Verbindung, die die herausgelösten Körner zu einem Korntank **27** befördert.

Die von der Sauggebläsevorrichtung **8** angesaugten Restbestandteile **7** werden mithilfe des Saugluftstroms durch eine Austrittsöffnung **11** der Sauggebläsevorrichtung **8** ausgeblasen und in einen Eintrittsquerschnitt **17** eines Streublechverteilers **12,** der der Sauggebläsevorrichtung **8** nachgeordnet ist, abgegeben. Dabei ist der Streublechverteiler **12** untenseitig an der Verteilvorrichtung **9** sowie in einem Abstand **35** von der Sauggebläsevorrichtung **8** angeordnet, sodass die Restbestandteile **7** nach ihrem Austritt aus der Austrittsöffnung **11** der Sauggebläsevorrichtung **8** mittels eines Führkanals 21 dem Streublechverteiler **12** zugeführt werden.

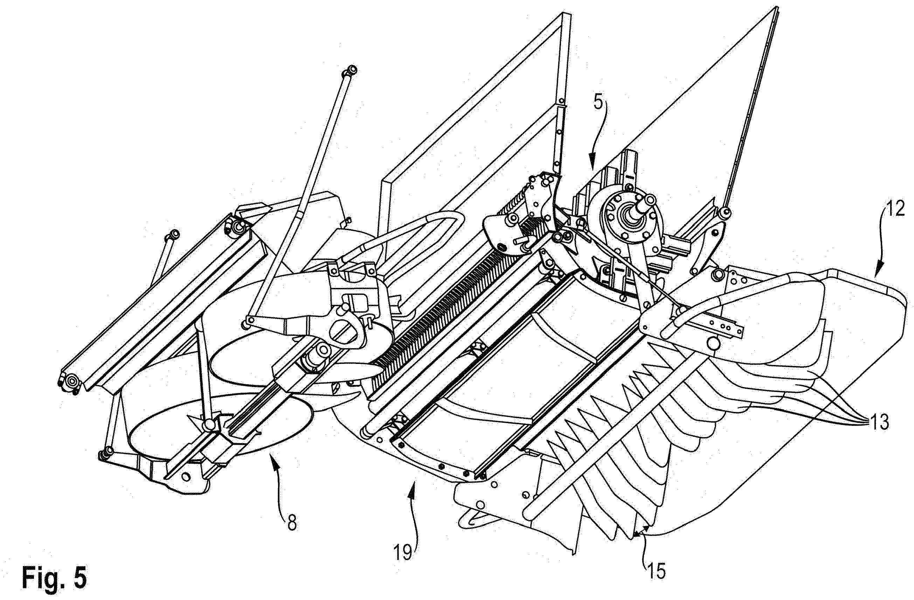

Der Streublechverteiler **12** ist im Wesentlichen aus einer Mehrzahl von Leitelementen **13** in Form von Blechen ausgebildet, wobei sich Abstände **15** zwischen benachbarten Leitelementen **13** - in Strömungsrichtung der Restbestandteile **7** betrachtet - über die Länge der Leitelemente **13** hinweg vergrößern, wie gut anhand von **Figur 5** erkennbar ist. Mittels einer den Restbestandteilen **7** von der Sauggebläsevorrichtung **8** zugeführten kinetischen Energie werden diese dem Streublechverteiler **12** zugeführt, wobei eine Strömungsrichtung der Restbestandteile **7** in Richtung des Felds **22** ausgerichtet ist. Infolge eines Auftreffens der Restbestanteile **7** auf die Leitelemente **13** wird die Strömungsrichtung derart verändert, dass die Restbestandteile **7** in eine Querrichtung **14** abgelenkt und dabei gewissermaßen "aufgefächert" werden. Die Restbestandteile **7** werden mithin in einer ersten Schicht auf dem Feld **22** ausgeworfen.

Der Reststrom **4** wird von dem Abscheiderotor **29** an eine Häckselvorrichtung **5** übergeben, die dem Abscheiderotor **29** nachgeordnet und leicht unterhalb des selbigen angeordnet ist. Eine Drehachse **34** der Häckselvorrichtung **5** ist hierbei senkrecht zu der Längsachse **16** des Mähdreschers **1** angeordnet. Die Häckselvorrichtung **5** zerkleinert die in dem Reststrom **4** enthaltenen Pflanzenteile und übergibt diese schließlich an eine Verteilvorrichtung **9,** die hier in Form eines Radialverteilers ausgebildet ist, wobei die Verteilvorrichtung **9** unterhalb der Häckselvorrichtung **5** angeordnet ist. Mittels der Verteilvorrichtung **9** werden die Bestandteile des Reststroms **4** beschleunigt und Infolge der Beschleunigung schließlich ebenfalls auf dem abgeernteten Feld **22** ausgeworfen und dabei in Querrichtung **14** des Mähdreschers **1** verteilt. Hierbei bildet der Reststrom **4** eine oberhalb der ersten Schicht angeordnete zweite Schicht aus.

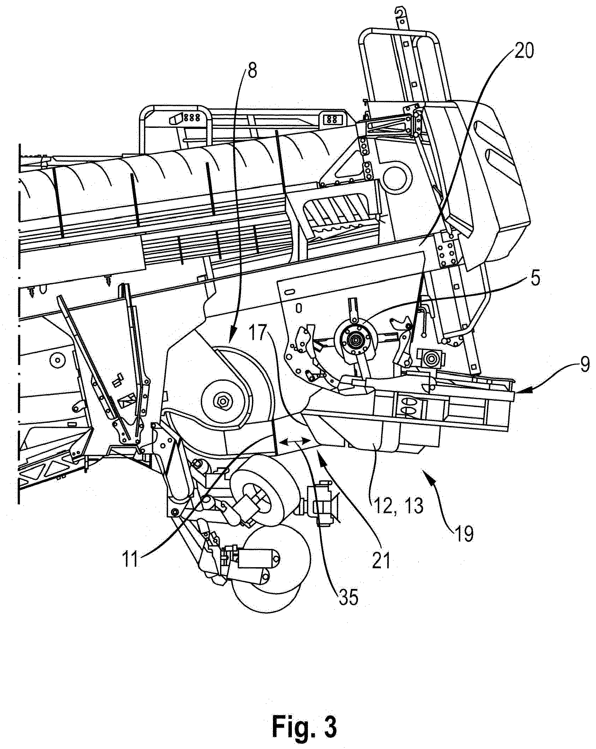

In dem gezeigten Beispiel bilden die Häckselvorrichtung **5,** die Verteilvorrichtung **9** und der Streublechverteiler **12** eine Einheit **19,** die als Ganzes relativ zu einem Rahmen **20** des Mähdreschers **1** bewegbar und somit in verschiedene Position überführbar ist. Auch die Sauggebläsevorrichtung **8** ist beweglich an dem Rahmen **20** angeordnet. In einem Arbeitszustand des Mähdreschers **1** nimmt die Einheit **19,** wie gut anhand **Figur 3** erkennbar ist, eine erste von drei möglichen Positionen ein, in der sie in einem Abstand **35** zu der Sauggebläsevorrichtung **8** angeordnet ist, wobei die Sauggebläsevorrichtung **8** unmittelbar an der Reinigungseinrichtung **6** angeordnet ist.

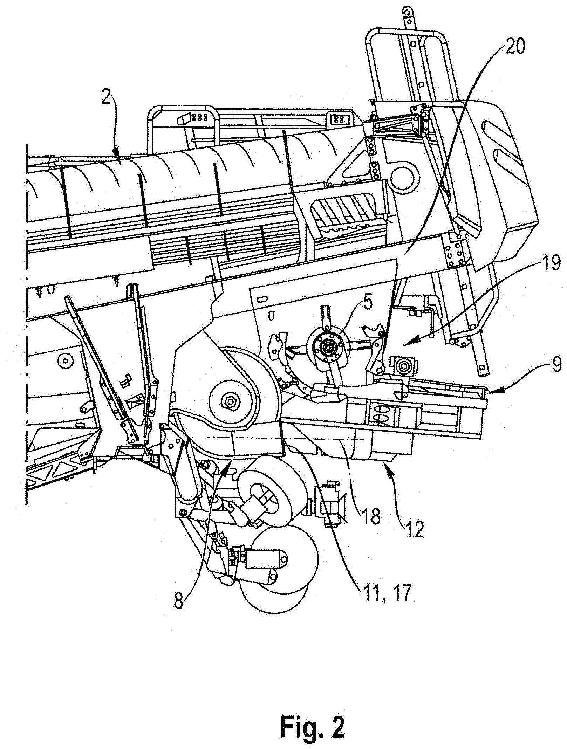

Mittels einer Bewegung der Einheit **19** in ihre zweite Position lässt sich der Mähdrescher **1** in einen Straßenzustand überführen, in der die Einheit **19** in einer proximalen Endposition sowie einer Nahposition zu der Sauggebläsevorrichtung **8** an dem Rahmen **20** angeordnet ist, wie gut anhand von **Figur 2** erkennbar ist.

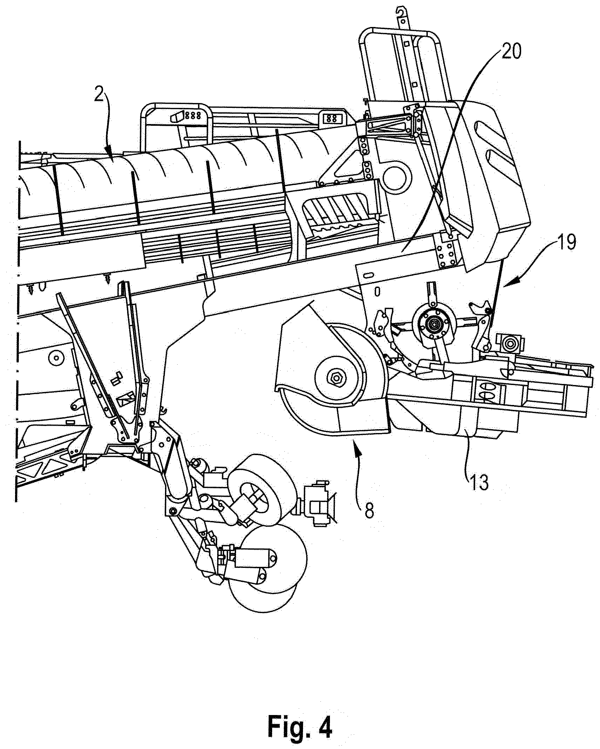

In einem Wartungszustand des Mähdreschers **1,** welcher in **Figur 4** gezeigt ist, ist die Sauggebläsevorrichtung **8** hingegen in einer Position angeordnet, in der die selbige in einem Abstand zu der Reinigungsvorrichtung **6** angeordnet ist und unmittelbar mit der Einheit **19** in Kontakt steht. Die Einheit **19** ist dabei in ihrer dritten Position, welche einer distalen Endposition entspricht, angeordnet, sodass ein Zugang zwischen die Sauggebläsevorrichtung **8** und die Reinigungsvorrichtung **6** möglich ist.

### Bezugszeichenliste

- 1: Mähdrescher
- 2: Abscheidevorrichtung
- 3: Gutstrom
- 4: Reststrom
- 5: Häckselvorrichtung
- 6: Reinigungsvorrichtung
- 7: Restbestandteil
- 8: Sauggebläsevorrichtung
- 9: Verteilvorrichtung
- 10: Eintrittsöffnung
- 11: Austrittsöffnung
- 12: Streublechverteiler
- 13: Leitelement
- 14: Querrichtung
- 15: Abstand
- 16: Längsrichtung
- 17: Eintrittsquerschnitt
- 18: Ebene
- 19: Einheit
- 20: Rahmen
- 21: Führkanal
- 22: Feld
- 23: Pflanze
- 24: Schneidwerk
- 25: Schrägförderer
- 26: Dreschwerk
- 27: Korntank
- 28: erster Boden
- 29: Hordenschüttler
- 30: zweiter Boden
- 31: dritter Boden
- 32: Förderschnecke
- 33: Sieb
- 34: Drehachse
- 35: Abstand
- 36: Fahrtrichtung
- 37: Sieb

## Patentansprüche

1. Selbstfahrender Mähdrescher (1), umfassend
- eine Abscheidevorrichtung (2) zur Abscheidung eines hauptsächlich von Körnern gebildeten Gutstroms (3) von einem hauptsächlich von Pflanzenresten gebildeten Reststrom (4),
- eine Häckselvorrichtung (5) zur Verarbeitung des Reststroms (4),
- eine Reinigungsvorrichtung (6) zur Reinigung des Gutstroms (3) von darin enthaltenen Restbestandteilen (7),
- mindestens eine Sauggebläsevorrichtung (8) sowie
- mindestens eine Verteilvorrichtung (9),
wobei die Sauggebläsevorrichtung (8) der Reinigungsvorrichtung (6) nachgeordnet ist, sodass die Restbestandteile (7) durch eine Eintrittsöffnung (10) der Sauggebläsevorrichtung (8) ansaugbar und auf diese Weise mittels der Sauggebläsevorrichtung (8) von der Reinigungsvorrichtung (6) übernehmbar sind,
wobei die Verteilvorrichtung (9) zum Auswurf des mittels der Häckselvorrichtung (5) verarbeiteten Reststroms (4) geeignet ist,
wobei eine Austrittsöffnung (11) der Sauggebläsevorrichtung (8), durch die die Restbestandteile (7) aus der Sauggebläsevorrichtung (8) ausblasbar sind, höhenmäßig unterhalb der Verteilvorrichtung (9) positioniert ist,
**gekennzeichnet durch**
das der Verteilvorrichtung (9) untenseitig ein Streublechverteiler (12) zugeordnet ist,
wobei die Sauggebläsevorrichtung (8) die Restbestandteile (7) in den Streublechverteiler (12) abgibt, wobei der Streublechverteiler (12) eine Mehrzahl von Leitelementen (13) aufweist, mittels derer dem Streublechverteiler (12) zugeführte Restbestandteile (7) in eine Querrichtung (14) des Mähdreschers (1) verteilbar ist.

2. Mähdrescher nach Anspruch 1, **dadurch gekennzeichnet, dass** die Leitelemente (13) nebeneinander angeordnet sind und sich Abstände (15) zwischen benachbarten Leitelementen (13) - in Strömungsrichtung der Restbestandteile (7) betrachtet - über die Länge der Leitelemente (13) hinweg vergrößern.

3. Mähdrescher nach einem der vorhergehenden Ansprüche, **dadurch gekennzeichnet, dass** die Verteilvorrichtung (9) und der Streublechverteiler (12) - in Längsrichtung (16) des Mähdreschers (1) betrachtet - relativ zueinander versetzt angeordnet sind, wobei vorzugsweise der Streublechverteiler (12) näher an der Sauggebläsevorrichtung (8) positioniert ist als die Verteilvorrichtung (9).

4. Mähdrescher nach Anspruch 3, **dadurch gekennzeichnet, dass** der Streublechverteiler (12) - in einer Seitenansicht des Mähdreschers (1) betrachtet - horizontal unterhalb der Häckselvorrichtung (5) und die Verteilvorrichtung (9) hinter der Häckselvorrichtung (5) angeordnet sind.

5. Mähdrescher nach einem der vorhergehenden Ansprüche, **dadurch gekennzeichnet, dass** die Austrittsöffnung (11) der Sauggebläsevorrichtung (9) und ein Eintrittsquerschnitt (17) des Streublechverteilers (12) gemeinsam in einer, vorzugsweise horizontalen, Ebene (18) angeordnet sind.

6. Mähdrescher nach einem der vorhergehenden Ansprüche, **dadurch gekennzeichnet, dass** die Häckselvorrichtung (5), die Verteilvorrichtung (9) und der Streublechverteiler (12) gemeinsam baulich zu einer Einheit (19) verbunden sind.

7. Mähdrescher nach Anspruch 6, **dadurch gekennzeichnet, dass** die Einheit (19) als Ganzes relativ zu einem Rahmen (20) des Mähdreschers (1) bewegbar und auf diese Weise in verschiedene Positionen überführbar ist.

8. Mähdrescher nach einem der vorhergehenden Ansprüche, **dadurch gekennzeichnet, dass** die Sauggebläsevorrichtung (8) relativ zu einem Rahmen (20) des Mähdreschers (1) bewegbar und auf diese Weise in verschiedene Positionen überführbar ist.

9. Mähdrescher nach Anspruch 6, **dadurch gekennzeichnet, dass** die Einheit (19) und die Sauggebläsevorrichtung (8) beabstandet voneinander an einem Rahmen (20) des Mähdreschers (1) positioniert sind, wobei vorzugsweise die Restbestandteile (7) nach ihrem Austritt aus der Austrittsöffnung (11) der Sauggebläsevorrichtung (8) mittels eines Führkanals (21) dem Streublechverteiler (12) zuleitbar sind.

10. Mähdrescher nach Anspruch 9, **dadurch gekennzeichnet, dass** die Sauggebläsevorrichtung (8) unmittelbar an die Reinigungsvorrichtung (6) angeschlossen und die Einheit (19) in einer von der Sauggebläsevorrichtung (8) abgewandten Position angeordnet ist.

11. Mähdrescher nach Anspruch 6, **dadurch gekennzeichnet, dass** die Einheit (19) und die Sauggebläsevorrichtung (8) in einer Nahposition zueinander an einem Rahmen (20) des Mähdreschers (1) positioniert sind, sodass eine Strecke, die die Restbestandteile (7) ausgehend von der Austrittsöffnung (11) der Sauggebläsevorrichtung (8) bis zu dem Streublechverteiler (12) überwinden, minimal, vorzugsweise gleich null, ist.

12. Mähdrescher nach Anspruch 11, **dadurch gekennzeichnet, dass** die Sauggebläsevorrichtung (8) unmittelbar an die Reinigungsvorrichtung (6) angeschlossen ist.

13. Mähdrescher nach Anspruch 11, **dadurch gekennzeichnet, dass** die Sauggebläsevorrichtung (8) in einer von der Reinigungsvorrichtung (6) beabstandeten Position an dem Rahmen (20) des Mähdreschers (1) angeordnet ist.

14. Verfahren zur Ernte von auf einem Feld (22) aufstehenden Pflanzen (23) mittels eines Mähdreschers (1),
wobei mittels einer Abscheidevorrichtung (2) des Mähdreschers (1) ein hauptsächlich von Körnern gebildeter Gutstrom (3) von einem hauptsächlich von Pflanzenresten gebildeten Reststrom (4) abgeschieden wird,
wobei mittels einer Häckselvorrichtung (5) des Mähdreschers (1) der Reststrom (4) verarbeitet wird,
wobei mittels einer Reinigungsvorrichtung (6) des Mähdreschers (1) der Gutstrom (3) von darin enthaltenen Restbestandteilen (7) gereinigt wird,
wobei mittels einer der Reinigungsvorrichtung (6) nachgeordneten Sauggebläsevorrichtung (8) des Mähdreschers (1) die Restbestandteile (7) durch eine Eintrittsöffnung (10) der Sauggebläsevorrichtung (8) angesaugt und auf diese Weise mittels der Sauggebläsevorrichtung (8) von der Reinigungsvorrichtung (6) übernommen werden,
wobei mittels der Sauggebläsevorrichtung (8) die übernommenen Restbestandteile (7) durch eine Austrittsöffnung (11) der Sauggebläsevorrichtung (8) ausgeblasen werden,
wobei der mittels der Häckselvorrichtung (5) des Mähdreschers (1) verarbeitete Reststrom (4) mittels einer Verteilvorrichtung (9) von der Häckselvorrichtung (5) übernommen und ausgeworfen wird,
**dadurch gekennzeichnet, dass**
die Sauggebläsevorrichtung (8) die Restbestandteile (7) in einen Streublechverteiler (12) abgeben, der der Verteilvorrichtung (9) untenseitig zugeordnet ist, wobei der Streublechverteiler (12) eine Mehrzahl von Leitelementen (13) aufweist, mittels derer dem Streublechverteiler (12) zugeführte Restbestandteile (7) in eine Querrichtung (14) des Mähdreschers (1) verteilbar ist.

## Claims

1. A self-propelled combine harvester (1), comprising
- a separating device (2) for separating a flow of material (3) primarily formed by grain from a residual flow (4) primarily formed by plant residues,
- a chopping device (5) for processing the residual flow (4),
- a cleaning device (6) for cleaning the flow of material (3) from residual components (7) contained therein,
- at least one suction fan device (8), as well as
- at least one spreading device (9),
wherein the suction fan device (8) is disposed downstream of the cleaning device (6), so that the residual components (7) can be sucked in through an intake opening (10) of the suction fan device (8) and in this manner can be transferred from the cleaning device (6) by the suction fan device (8),
wherein the spreading device (9) is suitable for ejecting the residual flow (4) processed by means of the chopping device (5),
wherein a discharge opening (11) of the suction fan device (8), through which the residual components (7) can be blown out of the suction fan device (8), is positioned at a height which is below the spreading device (9),
**characterized by**
a deflector plate spreader (12) being associated with the underneath of the spreading device (9),
wherein the suction fan device (8) delivers the residual components (7) to the deflector plate spreader (12), wherein the deflector plate spreader (12) has a plurality of guide elements (13), by means of which the residual components (7) supplied to the deflector plate spreader (12) can be spread in a direction (14) transverse to the combine harvester (1).

2. The combine harvester according to claim 1,
**characterized in that** the guide elements (13) are disposed adjacent to one another and separations (15) between adjacent guide elements (13) - viewed in the direction of flow of the residual components (7) - increase over the length of the guide elements (13).

3. The combine harvester according to one of the preceding claims, **characterized in that** the spreading device (9) and the deflector plate spreader (12) - viewed in the longitudinal direction (16) of the combine harvester (1) - are offset with respect to each other, wherein preferably, the deflector plate spreader (12) is positioned closer to the suction fan device (8) than the spreading device (9).

4. The combine harvester according to claim 3, **characterized in that** the deflector plate spreader (12) - viewed in a side view of the combine harvester (1) - is disposed horizontally beneath the chopping device (5) and the spreading device (9) is disposed behind the chopping device (5).

5. The combine harvester according to one of the preceding claims, **characterized in that** the discharge opening (11) of the suction fan device (9) and an intake cross section (17) of the deflector plate spreader (12) are disposed together in a plane (18) which is preferably horizontal.

6. The combine harvester according to one of the preceding claims, **characterized in that** the chopping device (5), the spreading device (9) and the deflector plate spreader (12) are structurally integrated into a unit (19).

7. The combine harvester according to claim 6, **characterized in that** the unit (19) as a whole is movable relative to a frame (20) of the combine harvester (1) and can be transposed into different positions in this manner.

8. The combine harvester according to one of the preceding claims, **characterized in that** the suction fan device (8) is movable relative to a frame (20) of the combine harvester (1) and can be transposed into different positions in this manner.

9. The combine harvester according to claim 6, **characterized in that** the unit (19) and the suction fan device (8) are positioned at a distance from one another on a frame (20) of the combine harvester (1), wherein preferably, after being discharged from the discharge opening (11) of the suction fan device (8), the residual components (7) can be fed to the deflector plate spreader (12) by means of a guide duct (21).

10. The combine harvester according to claim 9, **characterized in that** the suction fan device (8) is directly attached to the cleaning device (6) and the unit (19) is disposed in a position which faces away from the suction fan device (8).

11. The combine harvester according to claim 6, **characterized in that** the unit (19) and the suction fan device (8) are positioned close to one another on a frame (20) of the combine harvester (1), so that a distance traversed by the residual components (7) from the discharge opening (11) of the suction fan device (8) to the deflector plate spreader (12) is a minimum, preferably zero.

12. The combine harvester according to claim 11, **characterized in that** the suction fan device (8) is directly attached to the cleaning device (6).

13. The combine harvester according to claim 11, **characterized in that** the suction fan device (8) is disposed at a position on the frame (20) of the combine harvester (1) which is at a distance from the cleaning device (6).

14. A method for harvesting plants (23) standing on a field (22) by means of a combine harvester (1),
wherein a flow of material (3) primarily formed by grains is separated from a residual flow (4) primarily formed by plant residues by means of a separating device (2) of the combine harvester (1),
wherein the residual flow (4) is processed by means of a chopping device (5) of the combine harvester (1),
wherein the flow of material (3) is cleaned of residual components (7) contained therein by means of a cleaning device (6) of the combine harvester (1),
wherein, by means of a suction fan device (8) of the combine harvester (1) disposed downstream of the cleaning device (6), the residual components (7) are sucked in through an intake opening (10) of the suction fan device (8) and in this manner are transferred from the cleaning device (6) by means of the suction fan device (8),
wherein the residual components (7) which have been transferred are blown through a discharge opening (11) of the suction fan device (8) by means of the suction fan device (8),
wherein the residual flow (4) processed by means of the chopping device (5) of the combine harvester (1) is transferred from the chopping device (5) and ejected by means of a spreading device (9),
**characterized in that**
the suction fan device (8) delivers the residual components (7) to a deflector plate spreader (12) which is associated with the underneath of the spreading device (9), wherein the deflector plate spreader (12) has a plurality of guide elements (13) by means of which residual components (7) supplied to the deflector plate spreader (12) can be spread in a direction (14) transverse to the combine harvester (1).

## Revendications

1. Moissonneuse-batteuse automotrice (1), incluant
- un dispositif de séparation (2) pour la séparation d'un flux de produit (3), formé principalement de grains, d'un flux résiduel (4), formé principalement de restes de plantes,
- un dispositif de hachage (5) pour le traitement du flux résiduel (4),
- un dispositif de nettoyage (6) pour le nettoyage du flux de produit (3) de composants résiduels (7) contenus dedans,
- au moins un dispositif de ventilateur d'aspiration (8) ainsi que
- au moins un dispositif d'épandage (9),
le dispositif de ventilateur d'aspiration (8) étant disposé en aval du dispositif de nettoyage (6), de sorte que les composants résiduels (7) sont aspirables à travers une ouverture d'entrée (10) du dispositif de ventilateur d'aspiration (8) et peuvent ainsi être recueillis au moyen du dispositif de ventilateur d'aspiration (8) à partir du dispositif de nettoyage (6),
le dispositif d'épandage (9) étant apte à éjecter le flux résiduel (4) traité au moyen du dispositif de hachage (5),
une ouverture de sortie (11) du dispositif de ventilateur d'aspiration (8), à travers laquelle les composants résiduels (7) peuvent être évacués par soufflage hors du dispositif de ventilateur d'aspiration (8), étant positionnée dans la hauteur au-dessous du dispositif d'épandage (9),
**caractérisée en ce que**
au dispositif d'épandage (9) est associé, en dessous, un épandeur à tôles d'éparpillage (12), le dispositif de ventilateur d'aspiration (8) envoyant les composants résiduels (7) dans l'épandeur à tôles d'éparpillage (12), l'épandeur à tôles d'éparpillage (12) comportant une pluralité d'éléments de guidage (13) au moyen desquels des composants résiduels (7) amenés à l'épandeur à tôles d'éparpillage (12) peut être épandu dans une direction transversale (14) de la moissonneuse-batteuse (1).

2. Moissonneuse-batteuse selon la revendication 1, **caractérisée en ce que** les éléments de guidage (13) sont disposés les uns à côté des autres et les intervalles (15) entre des éléments de guidage voisins (13) - considérés dans la direction d'écoulement des composants résiduels (7) - augmentent sur la longueur des éléments de guidage (13).

3. Moissonneuse-batteuse selon une des revendications précédentes, **caractérisée en ce que** le dispositif d'épandage (9) et l'épandeur à tôles d'éparpillage (12) - considérés dans la direction longitudinale (16) de la moissonneuse-batteuse (1) - sont disposés de manière décalée l'un par rapport à l'autre, préférentiellement l'épandeur à tôles d'éparpillage (12) étant positionné plus près du dispositif de ventilateur d'aspiration (8) que le dispositif d'épandage (9) .

4. Moissonneuse-batteuse selon la revendication 3, **caractérisée en ce que** l'épandeur à tôles d'éparpillage (12) - considéré dans une vue de côté de la moissonneuse-batteuse (1) - est disposé horizontalement au-dessous du dispositif de hachage (5) et le dispositif d'épandage (9) est disposé derrière le dispositif de hachage (5) .

5. Moissonneuse-batteuse selon une des revendications précédentes, **caractérisée en ce que** l'ouverture de sortie (11) du dispositif de ventilateur d'aspiration (9) et une section transversale d'entrée (17) de l'épandeur à tôles d'éparpillage (12) sont disposés conjointement dans un plan (18) préférentiellement horizontal.

6. Moissonneuse-batteuse selon une des revendications précédentes, **caractérisée en ce que** le dispositif de hachage (5), le dispositif d'épandage (9) et l'épandeur à tôles d'éparpillage (12) sont réunis ensemble structurellement en une unité (19).

7. Moissonneuse-batteuse selon la revendication 6, **caractérisée en ce que** l'unité (19) est déplaçable dans son entier par rapport à un bâti (20) de la moissonneuse-batteuse (1) et, de cette façon, peut être transférée dans différentes positions.

8. Moissonneuse-batteuse selon une des revendications précédentes, **caractérisée en ce que** le dispositif de ventilateur d'aspiration (8) est déplaçable par rapport à un bâti (20) de la moissonneuse-batteuse (1) et, de cette façon, peut être transféré dans différentes positions.

9. Moissonneuse-batteuse selon la revendication 6, **caractérisée en ce que** l'unité (19) et le dispositif de ventilateur d'aspiration (8) sont positionnés à distance l'un de l'autre sur le bâti (20) de la moissonneuse-batteuse (1), préférentiellement les composants résiduels (7) pouvant, après leur sortie par l'ouverture de sortie (11) du dispositif de ventilateur d'aspiration (8), être envoyés à l'épandeur à tôles d'éparpillage (12) au moyen du canal de guidage (21).

10. Moissonneuse-batteuse selon la revendication 9, **caractérisée en ce que** le dispositif de ventilateur d'aspiration (8) est relié directement au dispositif de nettoyage (6) et l'unité (19) est disposée dans une position opposée du dispositif de ventilateur d'aspiration (8) .

11. Moissonneuse-batteuse selon la revendication 6, **caractérisée en ce que** l'unité (19) et le dispositif de ventilateur d'aspiration (8) sont positionnés dans une position proche l'un de l'autre sur le bâti (20) de la moissonneuse-batteuse (1), de sorte qu'un trajet que les composants résiduels (7) parcourent depuis l'ouverture de sortie (11) du dispositif de ventilateur d'aspiration (8) jusqu'à l'épandeur à tôles d'éparpillage (12) est minimal, préférentiellement égal à zéro.

12. Moissonneuse-batteuse selon la revendication 11, **caractérisée en ce que** le dispositif de ventilateur d'aspiration (8) est relié directement au dispositif de nettoyage (6).

13. Moissonneuse-batteuse selon la revendication 11, **caractérisée en ce que** le dispositif de ventilateur d'aspiration (8) est disposé, sur le bâti (20) de la moissonneuse-batteuse (1), dans une position distante du dispositif de nettoyage (6) .

14. Procédé de récolte de plantes (23), disposées debout dans un champ (22), au moyen d'une moissonneuse-batteuse (1),
un flux de produit (3), formé principalement de grains, étant séparé d'un flux résiduel (4), formé principalement de restes de plantes, au moyen d'un dispositif de séparation (2) de la moissonneuse-batteuse (1),
le flux résiduel (4) étant traité au moyen du dispositif de hachage (5) de la moissonneuse-batteuse (1),
le flux de produit (3) étant débarrassé de composants résiduels (7) contenus dedans au moyen d'un dispositif de nettoyage (6) de la moissonneuse-batteuse (1),
au moyen d'un dispositif de ventilateur d'aspiration (8) de la moissonneuse-batteuse (1) disposé en aval du dispositif de nettoyage (6), les composants résiduels (7) étant aspirés à travers une ouverture d'entrée (10) du dispositif de ventilateur d'aspiration (8) et, de cette façon, recueillis au moyen du dispositif de ventilateur d'aspiration (8) à partir du dispositif de nettoyage (6),
au moyen du dispositif de ventilateur d'aspiration (8), les composants résiduels (7) recueillis étant évacués par soufflage à travers une ouverture de sortie (11) du dispositif de ventilateur d'aspiration (8),
le flux résiduel (4) traité au moyen du dispositif de hachage (5) de la moissonneuse-batteuse (1) étant recueilli au moyen d'un dispositif d'épandage (9) à partir du dispositif de hachage (5) et éjecté,
**caractérisé en ce que**
le dispositif de ventilateur d'aspiration (8) envoient les composants résiduels (7) dans un épandeur à tôles d'éparpillage (12) qui est associé, en dessous, au dispositif d'épandage (9), l'épandeur à tôles d'éparpillage (12) comportant une pluralité d'éléments de guidage (13) au moyen desquels des composants résiduels (7) envoyés à l'épandeur à tôles d'éparpillage (12) peut être épandu dans une direction transversale (14) de la moissonneuse-batteuse (1) .
